# EUROPÄISCHE PATENTSCHRIFT

(11) **EP 2 429 863 B1**
(45) Veröffentlichungstag und Bekanntmachung des Hinweises auf die Patenterteilung: **19.12.2012**
(21) Anmeldenummer: 10732262.0
(22) Anmeldetag: 14.05.2010
(51) Int. Cl.: B60R 13/08

(54) **SCHALLABSORBIERENDES HITZESCHILD**
SOUND-ABSORBING HEAT SHIELD
BOUCLIER THERMIQUE À ABSORPTION ACOUSTIQUE

(30) Priorität: 16.05.2009 DE 102009021621
(43) Veröffentlichungstag der Anmeldung: 21.03.2012
(73) Patentinhaber: Lydall Gerhardi GmbH & Co.KG, 58540 Meinerzhagen (DE)
(72) Erfinder: KLAUTKE, Martin, 58675 Hemer (DE)
(74) Vertreter: Dörner, Kötter & Kollegen
(86) Internationale Anmeldenummer: PCT/DE2010/000527
(87) Internationale Veröffentlichungsnummer: WO 2010/133202

(56) Entgegenhaltungen:
- EP-A1- 0 486 427
- WO-A1-2005/061280
- DE-A1- 19 821 532
- DE-A1- 19 825 762
- DE-A1-102008 030 709

## Beschreibung

Die Erfindung betrifft ein schallabsorbierendes Hitzeschild nach dem Patentanspruch 1.

Derartige Hitzeschilde finden insbesondere in der Automobilindustrie Verwendung, um beispielsweise das Tunnelinnere im Bodenteil eines Fahrzeugs zu verkleiden. Solchen Verkleidungen kommt eine große Bedeutung zu, da einerseits bei der üblichen Verwendung von Katalysatoren die Temperatur der Abgase und damit auch die Temperatur der Auspuffrohre stark erhöht ist und andererseits die Grenzwerte für den Geräuschpegel eines Fahrzeugs zunehmend tiefer anzusetzen sind.

Derzeit bekannte schallabsorbierende Hitzeschilde lassen sich in zwei Kategorien einteilen: "Multilayerabsorber" sind aus mehreren hintereinander angeordneten Folien gebildet, zwischen denen schmale Luftspalte angeordnet sind. Diese Absorber haben auf Grund ihrer geringen Dicke nur eine geringe schallabsorbierende Wirkung. Die sogenannten "Tuned Resonant Absorber" bestehen im Wesentlichen aus einem perforierten Trägerblech, hinter dem eine Schicht, bestehend aus porösem Medium, angeordnet ist. Zwischen dem Trägerblech und dem porösen Medium ist ein Luftspalt angeordnet. Ein schallabsorbierendes Hitzeschild ist bereits bekannt aus der WO 2005/061280 A1.

Eine Problematik bei den vorbekannten Hitzeschilden ist, dass diese oftmals in Eigenschwingung versetzt werden, wodurch diese selbst zur Schallquelle werden. Zudem besteht hier die Gefahr von Schwingungsrissen.

Hier will die Erfindung Abhilfe schaffen. Der Erfindung liegt die Aufgabe zu Grunde, ein schallabsorbierendes Hitzeschild zu schaffen, dass eine hohe Eigendämpfung aufweist und bei dem Schwingungsrisse vermieden sind. Gemäß der Erfindung wird diese Aufgabe durch die Merkmale des Patentanspruchs 1 gelöst.

Mit der Erfindung ist ein schallabsorbierendes Hitzeschild geschaffen, dass eine hohe Eigendämpfung aufweist und bei dem Schwingungsrisse vermieden sind. Durch die Verwendung einer Verbundfolie, welche aus zwei Metallfolien gebildet ist, die flächig über eine Dämpfungsschicht miteinander verbunden sind, ist eine gute Dämpfungswirkung erzielt. Die vorliegende Verbundfolie kann direkt in die Gestalt des Hitzeschildes verformt werden.

Bevorzugt sind die Metallfolien der Verbundfolie Aluminiumfolien. Dieser Werkstoff hat sich bei der Herstellung von Hitzeschilden bewährt.

In weiterer Ausgestaltung der Erfindung ist die Dämpfungsschicht der Verbundfolie als druckempfindlicher Kleber ausgebildet. Hierdurch ist eine homogene Dampfungsschicht über die Fläche der Verbundfolie erzielt.

Bevorzugt weist die Dämpfungsschicht eine Dicke von 10 µm bis 150 µm auf. Vorteilhaft beträgt die Dicke einer Metallschicht zwischen 100 µm und 700 µm. In diesen Bereichen wurden gute Ergebnisse hinsichtlich Bearbeitbarkeit der Verbundfolie sowie der hitze- und schallabsorbierenden Wirkung des aus der Verbundfolie hergestellten Hitzeschildes erzielt.

Andere Weiterbildungen und Ausgestaltungen der Erfindung sind in den übrigen Unteransprüchen angegeben.

Das als Ausführungsbeispiel gewählte Hitzeschild besteht im Wesentlichen aus einer Verbundfolie, welche aus zwei Metallfolien gebildet ist, zwischen die eine Dämpfschicht eingebracht ist. Im Ausführungsbeispiel weisen die Metallfolien eine Dicke von 0,3 mm auf, die Dicke der Dämpfungsschicht beträgt 0,1 mm. Hierdurch ergibt sich eine Gesamtfoliendicke von 0,7 mm. Die beiden Metallschichten können auch in gleicher Dicke ausgebildet sein, wodurch ein symmetrischer Aufbau bewirkt ist.

Die Dämpfungsschicht ist im Ausführungsbeispiel als Polyethylen-Polypropolen-Acryl-Silikat-Schicht ausgebildet. Diese Schicht bildet einen druckempfindlichen Kleber aus, der im Zuge der Herstellung der Verbundfolie in heißem Zustand zwischen die Aluminiumfolien verbracht wird. Anschließend werden die drei Schichten flächig mit Druck beaufschlagt, wodurch der Verbund der Schichten hergestellt ist. Die so gebildete Verbundfolie ist in Temperaturbereichen bis 400 Grad Celsius einsetzbar. Die Herstellung des Hitzeschildes erfolgt durch Verformung dieser Verbundfolie in die gewünschte Gestaltung.

Durch die Verwendung der beschriebenen Verbundfolie für die Herstellung von Hitzeschilden können Resonanzschwingungen deutlich vermindert und Schwingungsrisse vermieden werden. Gleichzeitig ist die Herstellung der Hitzeschilde in der Massenherstellung deutlich erleichtert.

## Patentansprüche

1. Schallabsorbierendes Hitzeschild, umfassend wenigstens drei Schichten, welche miteinander verbunden sind, wobei das Hitzeschild aus einer Verbundfolie hergestellt ist, welche zwei Metallfolien umfasst, die flächig über eine Dämpfungsschicht miteinander verbunden sind, **dadurch gekennzeichnet, dass** die Dämpfungsschicht in Form einer Schicht eines aufgebrachten druckempfindlichen Klebers ausgebildet ist.

2. Hitzeschild nach Anspruch 1, **dadurch gekennzeichnet, dass** die Metallfolien Aluminiumfolien sind.

3. Hitzeschild nach Anspruch 1 oder 2, **dadurch gekennzeichnet, dass** die Dämpfungsschicht als druckempfindlicher Kleber ausgebildet ist.

4. Hitzeschild nach Anspruch 3, **dadurch gekennzeichnet, dass** die Dämpfungsschicht eine Polyethylen-basierende Schicht ist.

5. Hitzeschild nach Anspruch 4, **dadurch gekennzeichnet, dass** in die Dämpfungsschicht Polypropylen enthält

6. Hitzeschild nach Anspruch 4 oder 5, **dadurch gekennzeichnet, dass** in die Dämpfungsschicht ein Silikat enthält.

7. Hitzeschild nach einem der Ansprüche 4 bis 6, **dadurch gekennzeichnet, dass** die Dämpfungsschicht ein Acryl enthält.

8. Hitzeschild nach einem der vorgenannten Ansprüche, **dadurch gekennzeichnet, dass** die Dämpfungsschicht eine Dicke von 10 µm 150 µm aufweist.

## Claims

1. Sound-absorbent thermal shield comprising at least three layers which are bonded to one another, where the thermal shield is manufactured of a compound foil comprising two metal foils whose surfaces are bonded to one another via a damping layer, **characterised in that** the damping layer is formed as a layer of applied pressure-sensitive adhesive.

2. Thermal shield according to claim 1, **characterised in that** the metal foils are aluminium foils.

3. Thermal shield according to claim 1 or claim 2, **characterised in that** the damping layer is formed of pressure-sensitive adhesive.

4. Thermal shield according to claim 3, **characterised in that** the damping layer is a polyethylene-based layer.

5. Thermal shield according to claim 4, **characterised in that** the damping layer contains polypropylene.

6. Thermal shield according to claim 4 or claim 5, **characterised in that** the damping layer contains a silicate.

7. Thermal shield according to any of the claims 4 to 6, **characterised in that** the damping layer contains an acrylic.

8. Thermal shield according to any of the preceding claims, **characterised in that** the damping layer has a thickness of between 10 µm and 150 µm.

## Revendications

1. Bouclier thermique à absorption acoustique, comprenant au mois trois couches reliées entre elles, sachant que le bouclier thermique est fabriqué à partir d'une feuille composite qui comprend deux feuilles métalliques reliées entre elles sur une vaste surface via une couche atténuatrice, **caractérisé en ce que** la couche atténuatrice se présente sous la forme d'une couche appliquée de colle sensible à la compression.

2. Bouclier thermique selon la revendication 1, **caractérisé en ce que** les feuilles métalliques sont des feuilles d'aluminium.

3. Bouclier thermique selon la revendication 1 ou 2, **caractérisé en ce que** la couche atténuatrice se présente sous forme de couche de colle sensible à la compression.

4. Bouclier thermique selon la revendication 3, **caractérisé en ce que** la couche atténuatrice est une couche à base de polyéthylène.

5. Bouclier thermique selon la revendication 4, **caractérisé en ce que** la touche atténuatrice contient du polypropylène.

6. Bouclier thermique selon la revendication 4 ou 5, **caractérisé en ce que** la couche atténuatrice contient un silicate.

7. Bouclier thermique selon la revendication 4 à 6, **caractérisé en ce que** la touche atténuatrice contient un acryle.

8. Bouclier thermique selon l'une des revendications précédentes, **caractérisé en ce que** la touche atténuatrice présente une épaisseur comprise entre 10 et 150 microns.
